# FASCICULE DE BREVET EUROPEEN

(11) **EP 4 547 506 B1**
(45) Date de publication et mention de la délivrance du brevet: **01.07.2026**
(21) Numéro de dépôt: 23733355.4
(22) Date de dépôt: 20.06.2023
(51) Int. Cl.: B60H 1/00, B60H 1/32

(54) **PROCÉDÉ DE CONTRÔLE D'UN SYSTÈME DE CONDITIONNEMENT THERMIQUE**
VERFAHREN ZUR STEUERUNG EINER THERMISCHEN KLIMAANLAGE
METHOD FOR CONTROLLING A THERMAL CONDITIONING SYSTEM

(30) Priorité: 29.06.2022 FR 2206497
(43) Date de publication de la demande: 07.05.2025
(73) Titulaire: Valeo Electrification, 95892 Cergy Pontoise (FR)
(72) Inventeur: NICOLAS, Bertrand, 78320 Le Mesnil-Saint-Denis (FR); YAHIA, Mohamed, 78320 Le Mesnil-Saint-Denis (FR)
(74) Mandataire: Valeo Powertrain Systems
(86) Numéro de dépôt international: PCT/EP2023/066556
(87) Numéro de publication internationale: WO 2024/002776

(56) Documents cités:
- WO-A1-2019/135049
- FR-A1- 3 110 878
- US-B2- 10 384 511

## Description

### Domaine technique

La présente invention se rapporte au domaine des systèmes de conditionnement thermique. De tels systèmes de conditionnement thermique peuvent notamment équiper un véhicule automobile. Ces systèmes permettent de réaliser une régulation thermique de différents organes du véhicule, comme l'habitacle ou une batterie de stockage d'énergie électrique, lorsque la chaine de traction du véhicule est électrique. Les échanges de chaleur sont gérés principalement par la compression et la détente d'un fluide réfrigérant au sein de plusieurs échangeurs de chaleur.

### Technique antérieure

Les systèmes de conditionnement thermiques font couramment appel à un circuit de fluide réfrigérant et un circuit de liquide caloporteur échangeant de la chaleur avec le fluide réfrigérant. De tels systèmes sont ainsi appelés indirects. Un compresseur assure le passage à haute pression du fluide réfrigérant.

Il est connu, comme par exemple du document WO 2019/135049 A1, de disposer en série dans le circuit de fluide réfrigérant un premier échangeur de chaleur permettant d'assurer le chauffage d'un flux d'air à destination de l'habitacle du véhicule, un deuxième échangeur de chaleur permettant de chauffer un élément de la chaine de traction du véhicule, et un troisième échangeur de chaleur permettant de refroidir cet élément de la chaine de traction du véhicule. L'élément de la chaine de traction est par exemple une batterie de stockage d'énergie électrique. Le deuxième échangeur et le troisième échangeur sont par exemple disposés conjointement sur le circuit de fluide réfrigérant et sur un circuit de liquide caloporteur. Le liquide caloporteur circulant dans le circuit permet d'assurer un échange thermique avec l'élément de la chaine de traction. Suivant les modes de fonctionnement, il est ainsi possible de fournir de la chaleur à l'élément de la chaine de traction du véhicule afin de le chauffer, ou de récupérer de la chaleur de cet élément afin de la transférer par exemple au flux d'air alimentant l'habitacle afin de le chauffer. Dans un mode de fonctionnement particulier, un chauffage de l'air de l'habitacle est réalisé par le premier échangeur de chaleur, et un chauffage du liquide caloporteur est simultanément assuré au niveau du deuxième échangeur de chaleur.

La puissance thermique totale fournie par le système de conditionnement thermique est ainsi répartie entre une première puissance thermique fournie par le premier échangeur et une deuxième puissance thermique fournie par le deuxième échangeur. Assurer un contrôle précis de la puissance thermique fournie par chacun des échangeurs est délicat.

Le but de la présente invention est de proposer un procédé de contrôle permettant de contrôler de manière robuste la puissance thermique totale fournie et sa répartition entre les deux échangeurs de chaleur.

### Résumé

A cette fin, la présente invention , telle que définie dans la revendication 1, propose un procédé de contrôle d'un système de conditionnement thermique notamment pour véhicule automobile, le système de conditionnement thermique comprenant:
- un circuit de liquide caloporteur configuré pour faire circuler un liquide caloporteur,
- un circuit de fluide réfrigérant comportant successivement selon un sens d'écoulement du fluide réfrigérant:
   -- un compresseur,
   -- un premier échangeur de chaleur configuré pour fournir une première puissance thermique à un fluide caloporteur,
   -- un premier détendeur,
   -- un deuxième échangeur de chaleur agencé conjointement sur le circuit de fluide réfrigérant et sur le circuit de liquide caloporteur de façon à fournir une deuxième puissance thermique au liquide caloporteur,
   -- un deuxième détendeur,
   -- un troisième échangeur de chaleur,
   le procédé de contrôle comportant les étapes :
      (i) Recevoir une consigne de puissance thermique totale à fournir, la consigne de puissance thermique totale à fournir étant la somme d'une première consigne de puissance thermique à fournir au fluide caloporteur dans le premier échangeur et d'une deuxième consigne de puissance thermique à fournir au liquide caloporteur dans le deuxième échangeur,
      (ii) Contrôler une pression du fluide réfrigérant dans le premier échangeur de façon à ce que la somme de la première puissance thermique fournie et de la deuxième puissance thermique fournie soit égale à la consigne de puissance thermique totale à fournir, et
      (iii) Contrôler une section de passage du premier détendeur de façon à ce que la deuxième puissance thermique fournie par le deuxième échangeur soit égale à la deuxième consigne de puissance thermique à fournir.

A l'étape (iii), le premier détendeur réalise une détente partielle du fluide réfrigérant de façon à ce que la deuxième puissance thermique fournie par le deuxième échangeur soit égale à la deuxième consigne de puissance thermique à fournir.

Cette détente partielle permet de diminuer la température de condensation dans le deuxième échangeur de chaleur et ainsi d'ajuster la répartition de la puissance thermique totale fournie entre la puissance fournie au premier échangeur et la puissance fournie au deuxième échangeur. La répartition souhaitée peut être obtenue.

Les caractéristiques listées dans les paragraphes suivant peuvent être mises en œuvre indépendamment les unes des autres ou selon toutes les combinaisons techniquement possibles :

Selon un exemple de mise en œuvre, le système de conditionnement thermique est un système de condition thermique pour véhicule automobile.

Le contrôle de la section de passage du premier détendeur est réalisé par un régulateur proportionnel, intégral.

Le contrôle de la section de passage du deuxième détendeur est réalisé par un régulateur proportionnel, intégral.

Ce type de régulateur assure une régulation robuste tout en restant simple à programmer et à mettre au point.

Selon un exemple de mise en œuvre du procédé, l'étape (ii) comprend les sous-étapes :
(ii1) Déterminer une consigne de température du fluide réfrigérant dans le premier échangeur à partir de la première consigne de puissance thermique et à partir d'une consigne de débit du fluide caloporteur,
(ii2) Déterminer une consigne de pression du fluide réfrigérant dans le premier échangeur à partir de la consigne de température déterminée.

De préférence, à l'étape (ii1), la consigne de température du fluide réfrigérant dans le premier échangeur est déterminée en outre à partir d'une température d'entrée du fluide réfrigérant dans le premier échangeur.

Selon un aspect du procédé de contrôle, l'étape (ii) comprend la sous-étape :
(ii3) Contrôler un régime de rotation du compresseur de façon à ce que la pression du fluide réfrigérant dans le premier échangeur soit égale à la consigne de pression déterminée.

La pression du fluide réfrigérant dans le premier échangeur peut être mesurée par un capteur de mesure disposé en entrée du premier échangeur.

Le compresseur est configuré pour faire passer le fluide réfrigérant d'une pression d'aspiration à une pression de refoulement.

Selon un aspect du procédé de contrôle, dans lequel le compresseur est configuré pour faire passer le fluide réfrigérant d'une pression d'aspiration à une pression de refoulement, l'étape (i) comprend la sous-étape :
(i3) Déterminer une consigne de pression de refoulement du compresseur à partir de la consigne de pression du fluide réfrigérant dans le premier échangeur déterminée.

Selon un aspect du procédé de contrôle, l'étape (ii) comprend la sous-étape :
(ii1) Contrôler un régime de rotation du compresseur de façon à ce que la pression de refoulement du compresseur soit égale à la consigne de pression de refoulement déterminée.

Selon un exemple de mise en œuvre du procédé, la pression du fluide réfrigérant dans le premier échangeur est sensiblement égale à la pression de refoulement du compresseur.

La pression du fluide réfrigérant dans le premier échangeur est par exemple estimée à partir d'une valeur mesurée de la pression de refoulement du compresseur.

Selon un exemple de mise en œuvre du procédé, le fluide caloporteur est un flux d'air intérieur à un habitacle d'un véhicule automobile.

Selon un autre exemple de mise en œuvre du procédé, le fluide caloporteur est un liquide caloporteur configuré pour circuler dans un cinquième échangeur de chaleur configuré pour échanger de la chaleur avec un flux d'air intérieur à l'habitacle du véhicule.

Selon un aspect du procédé, le deuxième échangeur de chaleur est couplé thermiquement avec un élément d'une chaine de traction du véhicule, par l'intermédiaire du liquide caloporteur du circuit de liquide caloporteur.

Le deuxième échangeur de chaleur permet ainsi de fournir une puissance thermique à l'élément de la chaine de traction du véhicule, c'est-à-dire de chauffer cet élément afin d'augmenter sa température.

Selon un mode de réalisation du procédé, le troisième échangeur de chaleur est couplé thermiquement à l'élément d'une chaine de traction du véhicule, par l'intermédiaire du liquide caloporteur du circuit de liquide caloporteur.

Le troisième échangeur de chaleur permet ainsi d'absorber de la chaleur de l'élément de la chaine de traction du véhicule, afin de maintenir sa température dans une limite acceptable ou afin de transférer la chaleur absorbée à un autre organe.

L'élément de la chaine de traction électrique comprend par exemple un moteur électrique de traction du véhicule.

En variante ou de manière complémentaire, l'élément de la chaine de traction électrique comprend un module électronique de pilotage d'un moteur électrique de traction du véhicule.

En variante encore, ou de manière complémentaire, l'élément de la chaine de traction électrique comprend une batterie de stockage d'énergie électrique.

L'invention, telle que définie dans la revendication 10, se rapporte également à un système de conditionnement thermique notamment pour véhicule automobile comprenant:
- un circuit de liquide caloporteur configuré pour faire circuler un liquide caloporteur,
- un circuit de fluide réfrigérant comportant :
   -- une boucle principale comprenant successivement selon un sens d'écoulement du fluide réfrigérant:
      --- un compresseur,
      --- un premier échangeur de chaleur configuré pour fournir une première puissance thermique à un fluide caloporteur,
      --- un premier détendeur,
      --- un deuxième échangeur de chaleur agencé conjointement sur le circuit de fluide réfrigérant et sur le circuit de liquide caloporteur de façon à fournir une deuxième puissance thermique au liquide caloporteur,
      --- un deuxième détendeur,
      --- un troisième échangeur de chaleur,
- Une unité électronique de contrôle configurée pour mettre en œuvre le procédé de contrôle décrit précédemment.

Selon un mode de réalisation, la boucle principale de fluide réfrigérant comprend un dispositif d'accumulation de fluide réfrigérant disposé en aval du deuxième échangeur et en amont du deuxième détendeur.

Selon un autre mode de réalisation, la boucle principale de fluide réfrigérant comprend un dispositif d'accumulation de fluide réfrigérant disposé en aval du troisième échangeur et en amont du compresseur.

Selon un mode de réalisation du système de conditionnement thermique, le circuit de fluide réfrigérant comprend une première branche de dérivation disposée en parallèle du deuxième détendeur et du troisième échangeur de chaleur, la première branche de dérivation comprenant un troisième détendeur et un quatrième échangeur de chaleur.

Le système de conditionnement thermique comprend une première branche de dérivation reliant fluidiquement un premier point de raccordement disposé sur la boucle principale en aval du deuxième échangeur et en amont du deuxième détendeur à un deuxième point de raccordement disposé sur la boucle principale en aval du troisième échangeur et en amont du compresseur, la première branche de dérivation comportant un troisième détendeur.

Selon un mode de réalisation du système de conditionnement thermique, le quatrième échangeur de chaleur est configuré pour échanger de la chaleur avec un flux d'air intérieur à l'habitacle du véhicule.

Selon un mode de réalisation, le circuit de fluide réfrigérant comprend une deuxième branche de dérivation permettant au fluide réfrigérant en sortie du compresseur de rejoindre le troisième échangeur en contournant le premier échangeur, le deuxième échangeur et le deuxième détendeur, la deuxième branche de dérivation comprenant un quatrième détendeur.

Le système de conditionnement thermique comprend une deuxième branche de dérivation reliant fluidiquement un troisième point de raccordement disposé sur la boucle principale en aval du compresseur et en amont du premier échangeur à un quatrième point de raccordement disposé sur la boucle principale en aval du deuxième détendeur et en amont du troisième échangeur, la deuxième branche de dérivation comportant un quatrième dispositif de détente.

Selon un mode de réalisation, dans lequel la boucle principale du circuit de fluide réfrigérant comprend un cinquième détendeur disposé en aval du compresseur et en amont du premier échangeur, le fluide réfrigérant est détendu par le cinquième détendeur et la pression du fluide réfrigérant dans le premier échangeur est inférieure à la pression de refoulement du compresseur.

La pression du fluide réfrigérant dans le premier échangeur est estimée à partir d'une valeur mesurée de la pression du fluide réfrigérant en sortie du cinquième détendeur.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique d'un système de conditionnement thermique selon un premier mode de réalisation, dans lequel le procédé de contrôle selon l'invention est mis en œuvre,
[Fig. 2] est une vue schématique d'un système de conditionnement thermique selon un deuxième mode de réalisation, dans lequel le procédé de contrôle selon l'invention est mis en œuvre,
[Fig. 3] est une vue schématique d'une variante du système de conditionnement thermique de la figure 2,
[Fig. 4] est une vue schématique d'une autre variante du système de conditionnement thermique de la figure 2,
[Fig. 5] est un diagramme thermodynamique schématisant l'état du fluide réfrigérant lorsque de la mise en œuvre du procédé de contrôle,

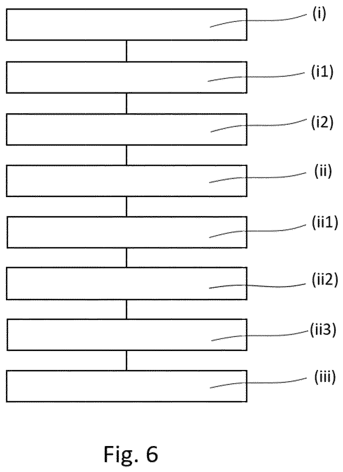

[Fig. 6] est un schéma-bloc illustrant différentes étapes du procédé selon l'invention.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Dans la description qui suit, le terme " un premier élément en amont d'un deuxième élément " signifie que le premier élément est placé avant le deuxième élément par rapport au sens de circulation, ou de parcours, d'un fluide. De manière analogue, le terme " un premier élément en aval d'un deuxième élément " signifie que le premier élément est placé après le deuxième élément par rapport au sens de circulation, ou de parcours, du fluide considéré. Dans le cas du circuit de fluide réfrigérant, le terme « un premier élément est en amont d'un deuxième élément » signifie que le fluide réfrigérant parcourt successivement le premier élément, puis le deuxième élément, sans passer par le dispositif de compression. Autrement dit, le fluide réfrigérant sort du dispositif de compression, traverse éventuellement ou plusieurs éléments, puis traverse le premier élément, puis le deuxième élément, puis regagne le dispositif de compression, éventuellement après avoir traversé d'autres éléments.

Le terme « un deuxième élément est placé entre un premier élément et un troisième élément » signifie que le plus court trajet pour passer du premier élément au troisième élément passe par le deuxième élément.

Quand il est précisé qu'un sous-système comporte un élément donné, cela n'exclut pas la présence d'autres éléments dans ce sous-système.

Dans le système de conditionnement thermique 100 décrit, une unité électronique de contrôle 50 reçoit des informations de différents capteurs, non représentés, mesurant notamment les caractéristiques du fluide réfrigérant en divers points du circuit. L'unité électronique de contrôle reçoit également des consignes émises par les occupants du véhicule, comme par exemple la température souhaitée à l'intérieur de l'habitacle. L'unité électronique de contrôle met en œuvre des lois de contrôle permettant le pilotage des différents actionneurs, afin d'assurer le contrôle du système de conditionnement thermique 100 de façon à assurer les consignes reçues. L'unité électronique de contrôle 50 met notamment en œuvre le procédé selon l'invention.

Le dispositif de compression 7 peut être un compresseur électrique, c'est-à-dire un compresseur dont les pièces mobiles sont entrainées par un moteur électrique. Le dispositif de compression 7 comporte un côté aspiration du fluide réfrigérant à basse pression, encore appelé entrée 7a du dispositif de compression, et un côté refoulement du fluide réfrigérant à haute pression, encore appelé sortie 7b du dispositif de compression 7. Le compresseur 7 est configuré pour faire passer le fluide réfrigérant d'une pression d'aspiration Pr_s à une pression de refoulement Pr_d.

La pression d'aspiration est un état dit de basse pression et la pression de refoulement est un état dit de haute pression. Les pièces mobiles internes du compresseur 7 font passer le fluide réfrigérant de l'état de basse pression côté entrée 7a à l'état de haute pression côté sortie 7b. Après détente dans un ou plusieurs dispositifs de détente, le fluide réfrigérant revient à l'entrée 7a du compresseur 7 et recommence un nouveau cycle thermodynamique.

Le circuit de fluide réfrigérant 10 forme un circuit fermé dans lequel peut circuler le fluide réfrigérant. Le circuit de fluide réfrigérant 10 est étanche lorsque celui çi est dans un état nominal de fonctionnement, c'est-à-dire sans défaut ou fuite. Chaque point de raccordement du circuit 10 permet au fluide réfrigérant de passer dans l'une ou l'autre des portions de circuit se rejoignant à ce point de raccordement. La répartition du fluide réfrigérant entre les portions de circuit se rejoignant en un point de raccordement se fait en jouant sur l'ouverture ou la fermeture de vannes d'arrêt, clapets anti-retour ou dispositif de détente compris sur chacune des branches. Autrement dit, chaque point de raccordement est un moyen de redirection du fluide réfrigérant arrivant à ce point de raccordement. Des vannes d'arrêt et les clapets antiretour permettent ainsi de diriger sélectivement le fluide réfrigérant dans les différentes branches du circuit de réfrigérant, afin d'assurer différents modes de fonctionnement, comme il sera décrit ultérieurement.

Le fluide réfrigérant utilisé par le circuit de fluide réfrigérant 10 est ici un fluide chimique tel que le R1234yf. D'autres fluides réfrigérants peuvent aussi être employés, comme par exemple le R134a, le R290 ou le R744.

On entend par flux d'air intérieur Fi un flux d'air à destination de l'habitacle du véhicule automobile. Ce flux d'air intérieur peut circuler dans une installation de chauffage, ventilation et/ou climatisation, souvent désignée par le terme Anglais « HVAC » signifiant « Heating, Ventilating and Air Conditioning ». Cette installation n'a pas été représentée sur les différentes figures.

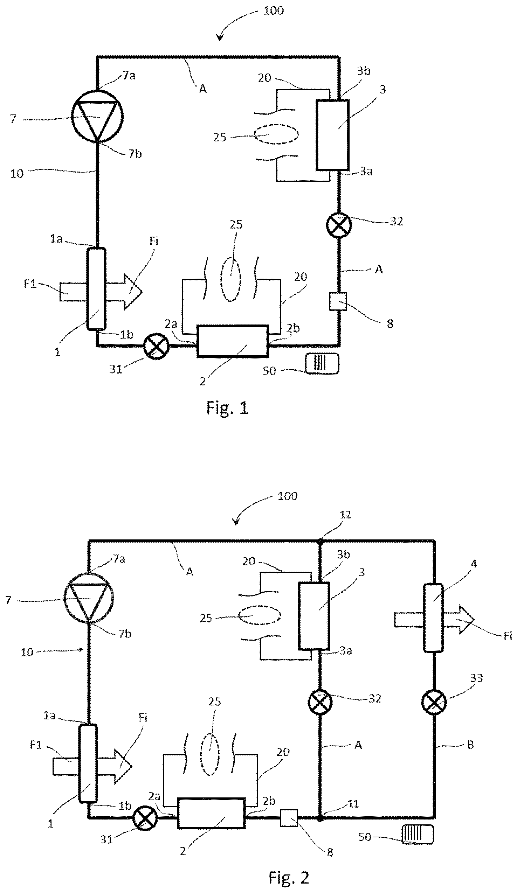

On a représenté sur la figure 1 un premier mode de réalisation d'un système de conditionnement thermique 100 comprenant:
- un circuit 20 de liquide caloporteur configuré pour faire circuler un liquide caloporteur,
- un circuit de fluide réfrigérant 10 comportant :
   -- une boucle principale A comprenant successivement selon un sens d'écoulement du fluide réfrigérant:
      --- un compresseur 7,
      --- un premier échangeur 1 de chaleur configuré pour fournir une première puissance thermique Pw1 à un fluide caloporteur F1,
      --- un premier détendeur 31,
      --- un deuxième échangeur 2 de chaleur agencé conjointement sur le circuit de fluide réfrigérant 10 et sur le circuit de liquide caloporteur 20 de façon à fournir une deuxième puissance thermique Pw2 au liquide caloporteur,
      --- un deuxième détendeur 32,
      --- un troisième échangeur 3 de chaleur,
- Une unité électronique de contrôle 50 configurée pour mettre en œuvre un procédé de contrôle qui va être décrit en détail ci-après.

Le premier échangeur de chaleur 1 est configuré pour échanger de la chaleur avec le fluide caloporteur F1. Le premier échangeur de chaleur 1 peut fonctionner en condenseur. La chaleur de condensation du fluide réfrigérant est transférée au fluide caloporteur F1. Une puissance thermique, désignée première puissance thermique Pw1 est ainsi fournie au fluide caloporteur F1.

La première puissance thermique Pw1 fournie est la puissance thermique fournie par le fluide réfrigérant au fluide caloporteur F1 au sein du premier échangeur 1 de chaleur.

Le deuxième échangeur 2 de chaleur est un échangeur bifluide. Autrement dit, le deuxième échangeur 2 de chaleur comprend un premier compartiment parcouru par le fluide réfrigérant et un deuxième compartiment parcouru par le liquide caloporteur. Les deux compartiments sont étanches et peuvent réaliser un échange thermique. L'échangeur bifluide 2 comprend une entrée 2a et une sortie 2b de fluide réfrigérant, ainsi qu'une entrée et une sortie de liquide caloporteur, non numérotées sur les figures illustratives. Le deuxième échangeur 2 est par exemple un échangeur à plaques.

Comme le premier échangeur 1, le deuxième échangeur 2 peut fonctionner en condenseur. La chaleur de condensation du fluide réfrigérant peut être transférée au liquide caloporteur circulant dans le deuxième échangeur 2.

La deuxième puissance thermique Pw2 fournie est la puissance thermique fournie par le fluide réfrigérant au liquide caloporteur du circuit de liquide caloporteur 20 au sein du deuxième échangeur 2 de chaleur.

Le troisième échangeur 3 de chaleur est également un échangeur bifluide.

Chaque détendeur est un dispositif de détente du fluide réfrigérant. Chaque détendeur permet d'ajuster le niveau de détente subi par le fluide réfrigérant en traversant ce détendeur. Chaque détendeur est configuré pour faire varier une section de passage du fluide réfrigérant. On entend par section de passage la surface à travers laquelle s'écoule le fluide réfrigérant lors de la traversée du détendeur.

Chaque détendeur comprend une entrée de fluide réfrigérant et une sortie de fluide réfrigérant. La sortie et l'entrée sont reliées fluidiquement par un canal. Un obturateur mobile permet de contrôler la section de passage du canal, c'est-à-dire la surface de passage offerte au fluide réfrigérant. Le détendeur est par exemple un détendeur électronique, c'est-à-dire que l'obturateur mobile est actionné par un moteur électrique commandé par une unité électronique de contrôle. La position de l'obturateur mobile peut être contrôlée en boucle fermée, c'est-à-dire que la position de l'obturateur mobile est mesurée et ajustée en temps réel de façon à atteindre une consigne de position. La section de passage du fluide réfrigérant peut être ajustée de manière continue entre une position de fermeture et une position d'ouverture maximale. Le module électronique de contrôle de chaque détendeur peut être intégré au détendeur correspondant. Selon une variante, l'unité électronique de contrôle 50 peut aussi assurer la commande et le contrôle de chaque détendeur.

Selon l'exemple de mise en œuvre illustré ici, le système de conditionnement thermique 100 est un système de condition thermique pour véhicule automobile.

Le fluide caloporteur F1 est, dans le mode de réalisation de la figure 1, un flux d'air intérieur Fi à un habitacle d'un véhicule automobile. Le premier échangeur 1 de chaleur est disposé dans l'installation de chauffage, ventilation et/ou climatisation. Le premier échangeur 1 permet ainsi de chauffer l'habitacle du véhicule.

Le deuxième échangeur de chaleur 2 est couplé thermiquement avec un élément 25 d'une chaine de traction du véhicule, par l'intermédiaire du liquide caloporteur du circuit de liquide caloporteur 20. Le deuxième échangeur de chaleur 2 permet ainsi de fournir une puissance thermique à l'élément 25 de la chaine de traction du véhicule, c'est-à-dire de chauffer cet élément afin d'augmenter sa température. Le chauffage de l'élément 25 de la chaine de traction, par exemple une batterie de stockage d'énergie électrique, peut être mis en œuvre par exemple lors de la phase de mise en action du véhicule par température ambiante négative.

En d'autres termes, le liquide caloporteur qui circule dans le circuit 20 de liquide caloporteur réalise un échange thermique avec l'élément 25 de la chaine de traction du véhicule, ce qui permet un échange de chaleur entre l'élément 25 et le deuxième échangeur de chaleur 2, c'est-à-dire un couplage thermique. Le liquide caloporteur est par exemple un mélange d'eau et de glycol. Le liquide caloporteur peut également être un liquide diélectrique, c'est-à-dire un liquide électriquement isolant.

L'élément 25 de la chaine de traction électrique comprend par exemple un moteur électrique de traction du véhicule. En variante, ou de manière complémentaire, l'élément 25 de la chaine de traction électrique comprend une batterie de stockage d'énergie électrique. En variante encore, ou de manière complémentaire, l'élément 25 de la chaine de traction électrique comprend un module électronique de pilotage d'un moteur électrique de traction du véhicule.

Le troisième échangeur de chaleur 3 est couplé thermiquement à l'élément 25 de la chaine de traction du véhicule, par l'intermédiaire du liquide caloporteur du circuit de liquide caloporteur 20.

Le troisième échangeur de chaleur 3 permet ainsi d'absorber de la chaleur de l'élément 25 de la chaine de traction du véhicule, afin de maintenir sa température dans une limite acceptable ou afin de transférer la chaleur absorbée à un autre organe. L'action conjuguée du deuxième échangeur 2 et du troisième échangeur 3 permet d'assurer un conditionnement thermique de l'élément 25 de la chaine de traction selon divers modes de fonctionnement. Le circuit de liquide caloporteur 20 n'a pas été détaillé, et est représenté par des traits interrompus au niveau du troisième échangeur 3 et au niveau du deuxième échangeur 2. Pour simplifier la représentation et éviter des croisements entre les lignes des différents circuits, le circuit 20 est représenté en deux parties distinctes.

Le circuit 20 de liquide caloporteur comprend au moins une pompe de circulation, non représentée, permettant de faire circuler le liquide caloporteur dans le circuit 20.

Selon le mode de réalisation de la figure 1, la boucle principale A de fluide réfrigérant comprend un dispositif d'accumulation 8 de fluide réfrigérant disposé en aval du deuxième échangeur 2 et en amont du deuxième détendeur 32. Le dispositif d'accumulation 8 de fluide réfrigérant est une bouteille déshydratante. Le dispositif d'accumulation 8 permet de compenser les variations de la masse de fluide réfrigérant circulant dans le circuit 10 suivant les modes de fonctionnement du système de conditionnement thermique 100.

Un des modes de fonctionnement possible du système de conditionnement thermique est un mode dans lequel le fluide réfrigérant fournit de la chaleur au fluide caloporteur F1 au niveau du premier échangeur 1, fournit de la chaleur au liquide caloporteur au niveau du deuxième échangeur 2, et reçoit de la chaleur au niveau du troisième échangeur 3. Le fluide caloporteur F1 reçoit une première puissance thermique Pw1 au niveau du premier échangeur 1 et le liquide caloporteur reçoit une deuxième puissance thermique Pw2 au niveau du deuxième échangeur 2. Au cours du fonctionnement du système de conditionnement thermique 100, il est souhaitable de pouvoir faire varier ces deux puissances Pw1, Pw2 indépendamment l'une de l'autre. Autrement dit, pour une puissance totale donnée, il est souhaitable de pouvoir ajuster la répartition de cette puissance totale entre la première puissance Pw1 et la deuxième puissance Pw2.

La présente invention propose ainsi un procédé de contrôle d'un système de conditionnement thermique 100 notamment pour véhicule automobile, le système de conditionnement thermique 100 comprenant:
- un circuit 20 de liquide caloporteur configuré pour faire circuler un liquide caloporteur,
- un circuit de fluide réfrigérant 10 comportant successivement selon un sens d'écoulement du fluide réfrigérant:
   -- un compresseur 7,
   -- un premier échangeur 1 de chaleur configuré pour fournir une première puissance thermique Pw1 à un fluide caloporteur F1,
   -- un premier détendeur 31,
   -- un deuxième échangeur 2 de chaleur agencé conjointement sur le circuit de fluide réfrigérant 10 et sur le circuit de liquide caloporteur 20 de façon à fournir une deuxième puissance thermique Pw2 au liquide caloporteur,
   -- un deuxième détendeur 32,
   -- un troisième échangeur 3 de chaleur.

Le procédé de contrôle comporte les étapes :
(i) Recevoir une consigne de puissance thermique totale C_Pw à fournir, la consigne de puissance thermique totale C_Pw à fournir étant la somme d'une première consigne de puissance thermique C_Pw1 à fournir au fluide caloporteur F1 dans le premier échangeur 1 et d'une deuxième consigne de puissance thermique C_Pw2 à fournir au liquide caloporteur dans le deuxième échangeur 2,
(ii) Contrôler une pression du fluide réfrigérant dans le premier échangeur 1 de façon à ce que la somme de la première puissance thermique Pw1 fournie et de la deuxième puissance thermique Pw2 fournie soit égale à la consigne de puissance thermique totale C_Pw à fournir, et
(iii) Contrôler une section de passage du premier détendeur 31 de façon à ce que la deuxième puissance thermique Pw2 fournie par le deuxième échangeur 2 soit égale à la deuxième consigne de puissance thermique C_Pw2 à fournir.

A l'étape (iii), le premier détendeur 31 réalise une détente partielle du fluide réfrigérant de façon à ce que la deuxième puissance thermique Pw2 fournie par le deuxième échangeur 2 soit égale à la deuxième consigne de puissance thermique C_Pw2 à fournir.

Cette détente partielle permet de diminuer la température de condensation dans le deuxième échangeur de chaleur 2 et ainsi d'ajuster la répartition de la puissance thermique totale fournie entre la puissance fournie au premier échangeur 1 et la puissance fournie au deuxième échangeur 2. La répartition souhaitée peut être obtenue.

La consigne de puissance totale C_Pw ainsi que la première C_Pw1 et la deuxième C_Pw 2 consigne de puissance thermique peuvent être élaborée de différentes manières.
Par exemple, une consigne de puissance thermique totale C_Pw peut être émise, avec une consigne de répartition entre la première et la deuxième puissance thermique. Autrement dit, la puissance totale à fournir est connue, de même que la fraction de cette puissance totale devant être attribuée à la première puissance thermique Pw1 et à la deuxième puissance thermique Pw2.
Alternativement, une première consigne C_Pw1 peut être directement reçue pour la première puissance thermique, de même qu'une deuxième consigne C_Pw2 pour la deuxième puissance thermique.

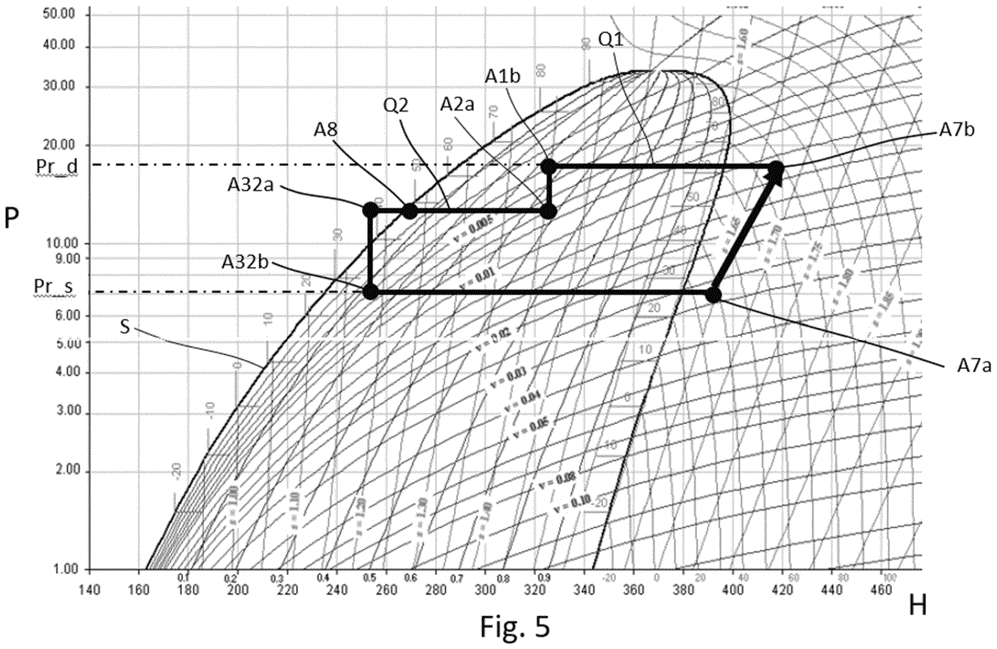

La figure 5 illustre le fonctionnement du système de conditionnement thermique 100 de la figure 1 lorsque le procédé ici décrit est mis en œuvre.

Cette figure illustre l'état thermodynamique du fluide réfrigérant lors du cycle thermodynamique décrit. La grandeur sur l'axe des abscisses est l'enthalpie H du fluide réfrigérant. La grandeur sur l'axe des ordonnées est la pression P du fluide réfrigérant, sur une échelle logarithmique. La courbe S est la courbe de saturation caractéristique du fluide réfrigérant employé. La région du diagramme comprise entre la courbe de saturation S et l'axe des abscisses correspond au domaine diphasique du fluide réfrigérant.

Le point A7a représente l'état du fluide réfrigérant à l'entrée 7a du compresseur 7. La pression du fluide réfrigérant y est égale à la pression d'aspiration Pr_s. Le point A7b représente l'état du fluide réfrigérant en sortie 7b du compresseur 7. La pression y est égale à la pression de refoulement Pr_d. L'enthalpie et la pression du fluide réfrigérant à l'entrée du premier échangeur 1 sont sensiblement égales à celles du point A7b. Le point A1b représente l'état du fluide réfrigérant en sortie 1b du premier échangeur 1. La différence d'enthalpie entre l'entrée 1a et la sortie 1b du premier échangeur 1, marquée par le signe Q1, est représentative de la première puissance thermique Pw1 fournie. Le premier détendeur 31 réalise une détente partielle du fluide réfrigérant, de sorte que la pression du fluide réfrigérant dans le deuxième échangeur 2 est inférieure à la pression du fluide réfrigérant dans le premier échangeur 1. Le point A2a schématise l'état du fluide réfrigérant en entrée au deuxième échangeur 2. Le point A8 schématise l'état du fluide réfrigérant en sortie du dispositif d'accumulation 8. La variation d'enthalpie dans le deuxième échangeur 2, marquée par le signe Q2, est représentative de la deuxième puissance thermique Pw2 fournie. Le niveau de détente réalisé par le premier détendeur 31, schématisé par l'écart vertical entre le point A1b et le point A2a, permet d'ajuster la température de condensation du fluide réfrigérant dans le deuxième échangeur 2 et donc d'ajuster la deuxième puissance thermique Pw2. Le deuxième détendeur 32 réalise une détente du fluide réfrigérant jusqu'à un état de basse pression. Le point A32a illustre l'état du fluide réfrigérant en amont du deuxième détendeur 32 et le point A32b illustre l'état du fluide réfrigérant en aval du deuxième détendeur 32. Le fluide réfrigérant à basse pression s'évapore dans le troisième échangeur 3, et rejoint l'entrée 7a du compresseur 7. La variation d'enthalpie entre le point A32b et le point A7a est représentative de la puissance thermique absorbée par le fluide réfrigérant au sein du troisième échangeur 3, c'est-à-dire lors du passage de l'entrée 3a à la sortie 3b du troisième échangeur 3.

Le contrôle de la section de passage du premier détendeur 31 est réalisé par un régulateur proportionnel, intégral. De même, le contrôle de la section de passage du deuxième détendeur 32 est réalisé par un régulateur proportionnel, intégral. Ce type de régulateur assure une régulation robuste tout en restant simple à programmer et à mettre au point. D'autres types de régulateur peuvent bien sûr être utilisés.

L'étape (ii) comprend les sous-étapes :
(ii1) Déterminer une consigne de température C_T1 du fluide réfrigérant dans le premier échangeur 1 à partir de la première consigne de puissance thermique C_Pw1 et à partir d'une consigne de débit C_Q1 du fluide caloporteur F1,
(ii2) Déterminer une consigne de pression C_P1 du fluide réfrigérant dans le premier échangeur 1 à partir de la consigne de température C_T1 déterminée.

De préférence, à l'étape (ii1), la consigne de température C_T1 du fluide réfrigérant dans le premier échangeur 1 est déterminée en outre à partir d'une température d'entrée T1_i du fluide réfrigérant dans le premier échangeur 1.

L'étape (ii1) de détermination d'une consigne de température C_T1 du fluide réfrigérant dans le premier échangeur 1 est basée sur le fait que la température du fluide caloporteur F1 après échange de chaleur dans le premier échangeur 1 et la température du fluide réfrigérant dans le premier échangeur 1 sont corrélées. Une consigne de température du fluide réfrigérant peut donc être élaborée à partir de la température à atteindre pour le fluide caloporteur F1.
La première puissance thermique Pw_1 fournie est égale au débit Q1 de fluide caloporteur F1 multiplié par la capacité calorifique du fluide caloporteur F1 et multiplié par l'écart entre la température de sortie du fluide caloporteur F1 et la température d'entrée du fluide caloporteur F1 dans le premier échangeur 1.
La température d'entrée du fluide caloporteur F1, c'est-à-dire la température avant échange de chaleur au sein du premier échangeur 1, étant connue, un objectif de température de sortie du fluide caloporteur F1 peut être déterminé. De là, une consigne de température C_T1 du fluide réfrigérant est déterminée.

Selon un mode de réalisation, la température du fluide caloporteur F1 en sortie du premier échangeur 1 est assimilée à la température du fluide réfrigérant dans le deuxième échangeur 1.

Selon un mode de réalisation, la relation entre la température du fluide caloporteur F1 en sortie du premier échangeur 1 et la température du fluide réfrigérant dans le premier échangeur 1 est déterminée en fonction du débit de fluide caloporteur F1. Par exemple, la valeur de l'objectif de température du fluide réfrigérant dans le premier échangeur 1 peut être tabulée en fonction de la température du fluide caloporteur en sortie du premier échangeur 1 et en fonction de la valeur du débit de fluide caloporteur F1. Autrement dit, la relation entre la température du fluide caloporteur F1 en sortie du premier échangeur 1 et la température du fluide réfrigérant dans le premier échangeur 1 prend en compte l'efficacité thermique du premier échangeur 1. Cette efficacité peut être caractérisée pour différents débits et mémorisée dans une table de la mémoire de l'unité électronique de contrôle.

L'étape (ii2) de détermination d'une consigne de pression C_P1 du fluide réfrigérant dans le premier échangeur 1 à partir de la consigne de température C_T1 est basée sur la courbe de saturation caractéristique du fluide réfrigérant employé. Comme illustré sur la figure 5, à chaque température de condensation du fluide réfrigérant est associé une pression du fluide réfrigérant.

L'étape (ii) comprend la sous-étape :
(ii3) Contrôler un régime de rotation N du compresseur 7 de façon à ce que la pression P1 du fluide réfrigérant dans le premier échangeur 1 soit égale à la consigne de pression C_P1 déterminée.

Le contrôle du régime de rotation N du compresseur 7 permet de contrôler la pression du fluide réfrigérant dans le premier échangeur 1. En règle générale, une augmentation du régime de rotation du compresseur 7 permet d'augmenter la pression P1 du fluide réfrigérant dans le premier échangeur 1.

La pression P1 du fluide réfrigérant dans le premier échangeur 1 peut être mesurée par un capteur de mesure disposé en entrée du premier échangeur 1. Le capteur de mesure peut aussi être disposé dans le premier échangeur 1.

L'étape (i) comprend la sous-étape :
(i3) Déterminer une consigne de pression de refoulement C_Pr_d du compresseur 7 à partir de la consigne de pression C_P1 du fluide réfrigérant dans le premier échangeur 1 déterminée.

L'étape (ii) comprend la sous-étape :
(ii1) Contrôler un régime de rotation N du compresseur 7 de façon à ce que la pression de refoulement Pr_d du compresseur 7 soit égale à la consigne de pression de refoulement C_Pr_d déterminée.

Selon un exemple de mise en œuvre du procédé, la pression du fluide réfrigérant dans le premier échangeur 1 est sensiblement égale à la pression de refoulement Pr_d du compresseur 7. Autrement dit, la perte de charge entre la sortie 7b du compresseur 7 et le premier échangeur 1 est alors négligée, et la consigne de pression C_P1 du fluide réfrigérant dans le premier échangeur 1 est transposée en une consigne de pression de refoulement C_Pr_d du compresseur 7.

Selon un autre exemple de mise en œuvre du procédé, la pression P1 du fluide réfrigérant dans le premier échangeur 1 est par exemple estimée à partir d'une valeur mesurée de la pression de refoulement Pr_d du compresseur 7. Autrement dit, l'écart entre la pression de refoulement Pr_d du compresseur 7 et la pression P1 du fluide réfrigérant dans le premier échangeur 1 est prise en compte.

La figure 2 représente un deuxième mode de réalisation du système de conditionnement thermique 100. Le circuit 10 de fluide réfrigérant comprend une première branche de dérivation B disposée en parallèle du deuxième détendeur 32 et du troisième échangeur de chaleur 3. La première branche de dérivation B comprend un troisième détendeur 33 et un quatrième échangeur de chaleur 4.

Autrement dit, le système de conditionnement thermique 100 comprend une première branche de dérivation B reliant fluidiquement un premier point de raccordement 11 disposé sur la boucle principale A en aval du deuxième échangeur 2 et en amont du deuxième détendeur 32 à un deuxième point de raccordement 12 disposé sur la boucle principale A en aval du troisième échangeur 3 et en amont du compresseur 7. La première branche de dérivation B comporte un troisième détendeur 33. Le troisième détendeur 33 est disposé en amont du quatrième échangeur 4.

Sur l'exemple illustré, le quatrième échangeur 4 de chaleur est configuré pour échanger de la chaleur avec un flux d'air Fi intérieur à l'habitacle du véhicule. Le quatrième échangeur 4 de chaleur est disposé dans l'installation de chauffage, ventilation et/ou climatisation. Le premier échangeur 1 est disposé en aval du quatrième échangeur 4 selon un sens d'écoulement du flux d'air intérieur Fi. Le quatrième échangeur 4 permet de refroidir l'habitacle, le premier échangeur 1 permettant lui de chauffer l'habitacle.

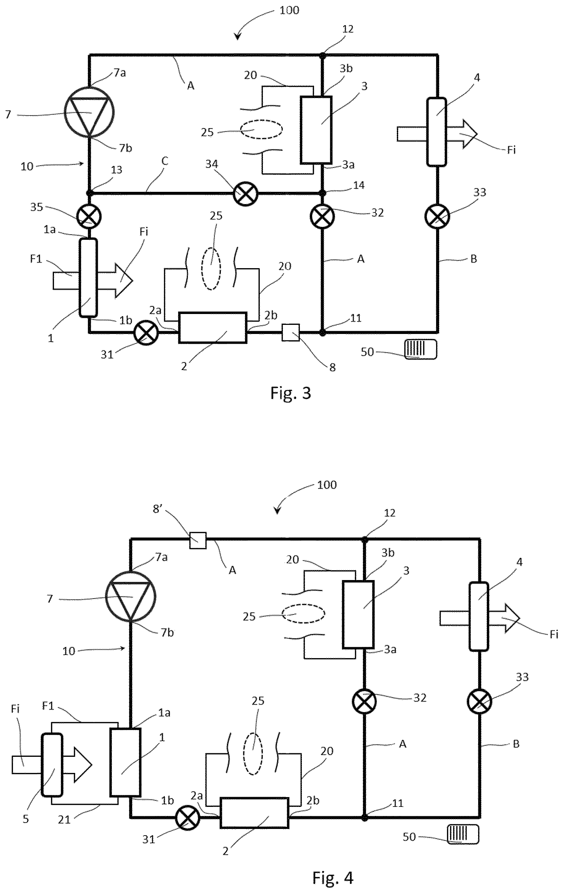

La figure 4 illustre une variante du deuxième mode de réalisation. Selon cette variante, le fluide caloporteur F1 est un liquide caloporteur configuré pour circuler dans un cinquième échangeur de chaleur 5 configuré pour échanger de la chaleur avec un flux d'air intérieur Fi à l'habitacle du véhicule.

Le cinquième échangeur de chaleur 5 est disposé sur un deuxième circuit de liquide caloporteur 21. Le chauffage de l'habitacle est ainsi réalisé de manière indirecte, puisque la chaleur de condensation du fluide réfrigérant est d'abord transférée au liquide caloporteur du circuit 21, et la chaleur du liquide caloporteur est ensuite transférée au flux d'air intérieur Fi au niveau du cinquième échangeur 5. Une pompe, non représentée, peut faire circuler le liquide caloporteur dans le circuit 21. Le rôle des autres échangeurs est le même que dans le mode de réalisation de la figure 2. Le circuit de liquide caloporteur 21 pour le chauffage habitacle et le circuit de liquide caloporteur 20 pour le couplage thermique avec l'élément 25 de la chaine de transmission sont disjoints, c'est-à-dire qu'ils ne communiquent pas. Le cinquième échangeur 5 est disposé dans l'installation de chauffage, ventilation et/ou climatisation. Dans les modes de réalisation où le quatrième échangeur 4 est présent, le cinquième échangeur 5 est disposé en aval du quatrième échangeur 4 selon un sens d'écoulement du flux d'air intérieur Fi.

La figure 3 représente un troisième mode de réalisation du système de conditionnement thermique 100. Le circuit 10 de fluide réfrigérant comprend une deuxième branche de dérivation C permettant au fluide réfrigérant en sortie du compresseur 7 de rejoindre le troisième échangeur 3 en contournant le premier échangeur 1, le deuxième échangeur 2 et le deuxième détendeur 32. La deuxième branche de dérivation C comprend un quatrième détendeur 34. Le quatrième détendeur 34 est configuré pour faire varier une section de passage du fluide réfrigérant dans la deuxième branche de dérivation C.

En d'autres termes, le système de conditionnement thermique 100 comprend une deuxième branche de dérivation C reliant fluidiquement un troisième point de raccordement 13 qui est disposé sur la boucle principale A en aval du compresseur 7 et en amont du premier échangeur 1 à un quatrième point de raccordement 14 qui est lui disposé sur la boucle principale A en aval du deuxième détendeur 32 et en amont du troisième échangeur 3. La deuxième branche de dérivation C comporte un quatrième dispositif de détente 34. Le quatrième détendeur 34 est configuré pour faire varier une section de passage du fluide réfrigérant dans la deuxième branche de dérivation C.

Dans ce mode de réalisation, le débit de fluide réfrigérant à haute pression en sortie du compresseur 7 est divisé entre un premier débit qui circule dans la boucle principale A et un deuxième débit qui circule dans la deuxième branche de dérivation C, la division en deux débits étant réalisée au niveau du troisième point de raccordement 13. Le premier débit de fluide réfrigérant circulant dans la boucle principale A se condense partiellement dans le premier échangeur 1 en cédant de la chaleur au fluide caloporteur F1, subit une détente partielle dans le premier détendeur 31 et se condense dans le deuxième échangeur 2. Si le troisième détendeur 33 est en position fermée, l'intégralité du débit de fluide réfrigérant sortant du deuxième échangeur traverse le deuxième détendeur 32, car le débit dans la première branche de dérivation B est nul. Le premier débit de fluide réfrigérant est ainsi détendu par le deuxième détendeur 32 et rejoint le quatrième point de raccordement 14.
Le deuxième débit de fluide réfrigérant, circulant dans la deuxième branche de dérivation C, subit une détente au niveau du quatrième détendeur 34. Le deuxième débit de fluide réfrigérant est à l'état de vapeur surchauffée. Ce débit de vapeur surchauffée circulant dans la deuxième branche de dérivation C est mélangé, au niveau du quatrième point de raccordement 14, au débit de fluide réfrigérant liquide ou diphasique circulant dans la boucle principale A. Le débit de vapeur surchauffé circulant dans la deuxième branche de dérivation C est contrôlé de façon à ce que le mélange obtenu soit sous forme entièrement gazeuse à la sortie du troisième échangeur 3, c'est-à-dire également sous forme de vapeur surchauffée. La fiabilité du compresseur 7 est ainsi assurée.
Lorsque le troisième détendeur 33 est en position ouverte, le premier débit de fluide réfrigérant, qui circule dans la boucle principale A en aval du deuxième échangeur 2, se divise au niveau du premier point de raccordement 11 en un troisième débit circulant dans la boucle principale A rejoignant le deuxième détenteur 32 et un quatrième débit circulant dans la première branche de dérivation B rejoignant le quatrième échangeur 4 de chaleur. Dans ce cas, le fluide réfrigérant en sortie du quatrième échangeur 4 rejoint au niveau du deuxième point de raccordement 12 le débit de fluide réfrigérant provenant du troisième échangeur 3. Le débit total de fluide réfrigérant rejoint l'entrée 7a du compresseur 7 et recommence un nouveau cycle.

Dans le troisième mode de réalisation, illustré sur la figure 3, la boucle principale A du circuit de fluide réfrigérant 10 comprend un cinquième détendeur 35 disposé en aval du compresseur 7 et en amont du premier échangeur 1. Le fluide réfrigérant est détendu par le cinquième détendeur 35 et la pression du fluide réfrigérant dans le premier échangeur 1 est inférieure à la pression de refoulement Pr_d du compresseur 7. La pression de refoulement du compresseur 7 étant augmentée, l'énergie reçue par le fluide réfrigérant est elle-même augmentée, ce qui permet d'accroitre la puissance thermique totale fournie par le système de conditionnement thermique.

La pression P1 du fluide réfrigérant dans le premier échangeur 1 est estimée à partir d'une valeur mesurée de la pression du fluide réfrigérant en sortie du cinquième détendeur 35.

Selon la variante de la figure 4, la boucle principale A de fluide réfrigérant comprend un dispositif d'accumulation 8' de fluide réfrigérant disposé en aval du troisième échangeur 3 et en amont du compresseur 7. Le dispositif d'accumulation 8' de fluide réfrigérant est un accumulateur de fluide réfrigérant. Cette variante peut être appliquée également au premier mode de réalisation ainsi qu'au troisième mode de réalisation.

De même, la deuxième branche de dérivation C peut être présente sans que la première branche de dérivation B ne soit présente. Cette variante n'a pas été représentée.

## Revendications

1. Procédé de contrôle d'un système de conditionnement thermique (100) notamment pour véhicule automobile, le système de conditionnement thermique (100) comprenant:
- un circuit (20) de liquide caloporteur configuré pour faire circuler un liquide caloporteur,
- un circuit de fluide réfrigérant (10) comportant successivement selon un sens d'écoulement du fluide réfrigérant:
-- un compresseur (7),
-- un premier échangeur (1) de chaleur configuré pour fournir une première puissance thermique (Pw1) à un fluide caloporteur (F1),
-- un premier détendeur (31),
-- un deuxième échangeur (2) de chaleur agencé conjointement sur le circuit de fluide réfrigérant (10) et sur le circuit de liquide caloporteur (20) de façon à fournir une deuxième puissance thermique (Pw2) au liquide caloporteur,
-- un deuxième détendeur (32),
-- un troisième échangeur (3) de chaleur,
le procédé de contrôle étant **caractérisé en ce qu'**il comporte
les étapes :
(i) Recevoir une consigne de puissance thermique totale (C_Pw) à fournir, la consigne de puissance thermique totale (C_Pw) à fournir étant la somme d'une première consigne de puissance thermique (C_Pw1) à fournir au fluide caloporteur (F1) dans le premier échangeur (1) et d'une deuxième consigne de puissance thermique (C_Pw2) à fournir au liquide caloporteur dans le deuxième échangeur (2),
(ii) Contrôler une pression du fluide réfrigérant dans le premier échangeur (1) de façon à ce que la somme de la première puissance thermique (Pw1) fournie et de la deuxième puissance thermique (Pw2) fournie soit égale à la consigne de puissance thermique totale (C_Pw) à fournir, et
(iii) Contrôler une section de passage du premier détendeur (31) de façon à ce que la deuxième puissance thermique (Pw2) fournie par le deuxième échangeur (2) soit égale à la deuxième consigne de puissance thermique (C_Pw2) à fournir.

2. Procédé de contrôle suivant la revendication 1, dans lequel l'étape (ii) comprend les sous-étapes :
(ii1) Déterminer une consigne de température (C_T1) du fluide réfrigérant dans le premier échangeur (1) à partir de la première consigne de puissance thermique (C_Pw1) et à partir d'une consigne de débit (C_Q1) du fluide caloporteur (F1), (ii2) Déterminer une consigne de pression (C_P1) du fluide réfrigérant dans le premier échangeur (1) à partir de la consigne de température (C_T1) déterminée.

3. Procédé de contrôle suivant la revendication précédente, dans lequel l'étape (ii) comprend la sous-étape :
(ii3) Contrôler un régime de rotation (N) du compresseur (7) de façon à ce que la pression (P1) du fluide réfrigérant dans le premier échangeur (1) soit égale à la consigne de pression (C_P1) déterminée.

4. Procédé de contrôle suivant la revendication 2 ou 3, dans lequel le compresseur (7) est configuré pour faire passer le fluide réfrigérant d'une pression d'aspiration (Pr_s) à une pression de refoulement (Pr_d), et dans lequel l'étape (i) comprend la sous-étape :
(i3) Déterminer une consigne de pression de refoulement (C_Pr_d) du compresseur (7) à partir de la consigne de pression (C_P1) du fluide réfrigérant dans le premier échangeur (1) déterminée.

5. Procédé de contrôle suivant la revendication précédente, dans lequel l'étape (ii) comprend la sous-étape :
(ii1) Contrôler un régime de rotation (N) du compresseur (7) de façon à ce que la pression de refoulement (Pr_d) du compresseur (7) soit égale à la consigne de pression de refoulement (C_Pr_d) déterminée.

6. Procédé selon l'une des revendications 1 à 5, dans lequel le fluide caloporteur (F1) est un flux d'air intérieur (Fi) à un habitacle d'un véhicule automobile.

7. Procédé selon l'une des revendications 1 à 5, dans lequel le fluide caloporteur (F1) est un liquide caloporteur configuré pour circuler dans un cinquième échangeur de chaleur (5) configuré pour échanger de la chaleur avec un flux d'air intérieur (Fi) à l'habitacle du véhicule.

8. Procédé selon l'une des revendications précédentes, dans lequel le deuxième échangeur de chaleur (2) est couplé thermiquement avec un élément (25) d'une chaine de traction du véhicule, par l'intermédiaire du liquide caloporteur du circuit de liquide caloporteur (20).

9. Procédé selon l'une des revendications précédentes, dans lequel le troisième échangeur de chaleur (3) est couplé thermiquement à l'élément (25) d'une chaine de traction du véhicule, par l'intermédiaire du liquide caloporteur du circuit de liquide caloporteur (20).

10. Système de conditionnement thermique (100) notamment pour véhicule automobile comprenant:
- un circuit (20) de liquide caloporteur configuré pour faire circuler un liquide caloporteur,
- un circuit de fluide réfrigérant (10) comportant :
-- une boucle principale (A) comprenant successivement selon un sens d'écoulement du fluide réfrigérant:
--- un compresseur (7),
--- un premier échangeur (1) de chaleur configuré pour fournir une première puissance thermique (Pw1) à un fluide caloporteur (F1),
--- un premier détendeur (31),
--- un deuxième échangeur (2) de chaleur agencé conjointement sur le circuit de fluide réfrigérant (10) et sur le circuit de liquide caloporteur (20) de façon à fournir une deuxième puissance thermique (Pw2) au liquide caloporteur,
--- un deuxième détendeur (32),
--- un troisième échangeur (3) de chaleur, le système de conditionnement thermique (100) étant **caractérisé en ce qu'**il comprend une unité électronique de contrôle (50) configurée pour mettre en œuvre le procédé de contrôle selon l'une des revendications précédentes.

11. Système de conditionnement thermique (100) selon la revendication 10, dans lequel le circuit (10) de fluide réfrigérant comprend une première branche de dérivation (B) disposée en parallèle du deuxième détendeur (32) et du troisième échangeur de chaleur (3), la première branche de dérivation (B) comprenant un troisième détendeur (33) et un quatrième échangeur de chaleur (4), et dans lequel le quatrième échangeur (4) de chaleur est configuré pour échanger de la chaleur avec un flux d'air (Fi) intérieur à l'habitacle du véhicule.

12. Système de conditionnement thermique (100) selon la revendication 10 ou 11, dans lequel le circuit (10) de fluide réfrigérant comprend une deuxième branche de dérivation (C) permettant au fluide réfrigérant en sortie du compresseur (7) de rejoindre le troisième échangeur (3) en contournant le premier échangeur (1), le deuxième échangeur (2) et le deuxième détendeur (32), la deuxième branche de dérivation (C) comprenant un quatrième détendeur (34).

## Patentansprüche

1. Verfahren zum Steuern eines thermischen Konditionierungssystems (100), insbesondere für ein Kraftfahrzeug, wobei das thermische Konditionierungssystem (100) Folgendes umfasst:
- einen Wärmeträgerflüssigkeitskreislauf (20), der dafür konfiguriert ist, eine Wärmeträgerflüssigkeit umzuwälzen,
- einen Kältemittelkreislauf (10), der in einer Strömungsrichtung des Kältemittels nacheinander Folgendes aufweist:
-- einen Verdichter (7),
-- einen ersten Wärmeübertrager (1), der dafür konfiguriert ist, eine erste Wärmeleistung (Pw1) an ein Wärmeträgerfluid (F1) bereitzustellen,
-- ein erstes Expansionsventil (31),
-- einen zweiten Wärmeübertrager (2), der gemeinsam an dem Kältemittelkreislauf (10) und an dem Wärmeträgerflüssigkeitskreislauf (20) so angeordnet ist, dass er eine zweite Wärmeleistung (Pw2) an die Wärmeträgerflüssigkeit bereitstellt,
-- ein zweites Expansionsventil (32),
-- einen dritten Wärmeübertrager (3),
wobei das Steuerungsverfahren **dadurch gekennzeichnet ist, dass** es die folgenden Schritte aufweist:
(i) Empfangen eines Sollwerts der bereitzustellenden Gesamtwärmeleistung (C_Pw), wobei der Sollwert der bereitzustellenden Gesamtwärmeleistung (C_Pw) die Summe aus einem ersten Sollwert der Wärmeleistung (C_Pw1), die dem Wärmeträgerfluid (F1) im ersten Wärmeübertrager (1) bereitzustellen ist, und einem zweiten Sollwert der Wärmeleistung (C_Pw2), die der Wärmeträgerflüssigkeit im zweiten Wärmeübertrager (2) bereitzustellen ist, ist,
(ii) Steuern eines Drucks des Kältemittels im ersten Wärmeübertrager (1) in der Weise, dass die Summe der bereitgestellten ersten Wärmeleistung (Pw1) und der bereitgestellten zweiten Wärmeleistung (Pw2) gleich dem Sollwert der bereitzustellenden Gesamtwärmeleistung (C_Pw) ist, und
(iii) Steuern eines Strömungsquerschnitts des ersten Expansionsventils (31) in der Weise, dass die vom zweiten Wärmeübertrager (2) bereitgestellte zweite Wärmeleistung (Pw2) gleich dem zweiten Sollwert der bereitzustellenden Wärmeleistung (C_Pw2) ist.

2. Steuerungsverfahren nach Anspruch 1, wobei der Schritt (ii) die folgenden Teilschritte umfasst:
(ii1) Bestimmen eines Sollwerts der Temperatur (C_T1) des Kältemittels im ersten Wärmeübertrager (1) aus dem ersten Sollwert der Wärmeleistung (C_Pw1) und aus einem Sollwert des Durchsatzes (C_Q1) des Wärmeträgerfluids (F1),
(ii2) Bestimmen eines Sollwerts des Drucks (C_P1) des Kältemittels im ersten Wärmeübertrager (1) aus dem bestimmten Sollwert der Temperatur (C_T1).

3. Steuerungsverfahren nach dem vorhergehenden Anspruch, wobei der Schritt (ii) den folgenden Teilschritt umfasst:
(ii3) Steuern einer Drehzahl (N) des Verdichters (7) in der Weise, dass der Druck (P1) des Kältemittels im ersten Wärmeübertrager (1) gleich dem bestimmten Sollwert des Drucks (C_P1) ist.

4. Steuerungsverfahren nach Anspruch 2 oder 3, wobei der Verdichter (7) dafür konfiguriert ist, das Kältemittel von einem Saugdruck (Pr_s) auf einen Förderdruck (Pr_d) zu bringen, und wobei der Schritt (i) den folgenden Teilschritt umfasst:
(i3) Bestimmen eines Sollwerts des Förderdrucks (C_Pr_d) des Verdichters (7) aus dem bestimmten Sollwert des Drucks (C_P1) des Kältemittels im ersten Wärmeübertrager (1).

5. Steuerungsverfahren nach dem vorhergehenden Anspruch, wobei der Schritt (ii) den folgenden Teilschritt umfasst:
(ii1) Steuern einer Drehzahl (N) des Verdichters (7) in der Weise, dass der Förderdruck (Pr_d) des Verdichters (7) gleich dem bestimmten Sollwert des Förderdrucks (C_Pr_d) ist.

6. Verfahren nach einem der Ansprüche 1 bis 5, wobei das Wärmeträgerfluid (F1) ein Innenluftstrom (Fi) eines Fahrgastraums eines Kraftfahrzeugs ist.

7. Verfahren nach einem der Ansprüche 1 bis 5, wobei das Wärmeträgerfluid (F1) eine Wärmeträgerflüssigkeit ist, die dafür konfiguriert ist, in einem fünften Wärmeübertrager (5) zu zirkulieren, der dafür konfiguriert ist, Wärme mit einem Innenluftstrom (Fi) des Fahrgastraums des Fahrzeugs auszutauschen.

8. Verfahren nach einem der vorhergehenden Ansprüche, wobei der zweite Wärmeübertrager (2) über die Wärmeträgerflüssigkeit des Wärmeträgerflüssigkeitskreislaufs (20) thermisch mit einem Element (25) eines Antriebsstrangs des Fahrzeugs gekoppelt ist.

9. Verfahren nach einem der vorhergehenden Ansprüche, wobei der dritte Wärmeübertrager (3) über die Wärmeträgerflüssigkeit des Wärmeträgerflüssigkeitskreislaufs (20) thermisch an das Element (25) eines Antriebsstrangs des Fahrzeugs gekoppelt ist.

10. Thermisches Konditionierungssystem (100), insbesondere für ein Kraftfahrzeug, umfassend:
- einen Wärmeträgerflüssigkeitskreislauf (20), der dafür konfiguriert ist, eine Wärmeträgerflüssigkeit umzuwälzen,
- einen Kältemittelkreislauf (10), der Folgendes aufweist:
-- einen Hauptkreislauf (A), der in einer Strömungsrichtung des Kältemittels nacheinander Folgendes aufweist:
--- einen Verdichter (7),
--- einen ersten Wärmeübertrager (1), der dafür konfiguriert ist, eine erste Wärmeleistung (Pw1) an ein Wärmeträgerfluid (F1) bereitzustellen,
--- ein erstes Expansionsventil (31),
--- einen zweiten Wärmeübertrager (2), der gemeinsam an dem Kältemittelkreislauf (10) und an dem Wärmeträgerflüssigkeitskreislauf (20) so angeordnet ist, dass er eine zweite Wärmeleistung (Pw2) an die Wärmeträgerflüssigkeit bereitstellt,
--- ein zweites Expansionsventil (32),
--- einen dritten Wärmeübertrager (3),
wobei das thermische Konditionierungssystem (100) **dadurch gekennzeichnet ist, dass** es eine elektronische Steuereinheit (50) umfasst, die dafür konfiguriert ist, das Steuerungsverfahren nach einem der vorhergehenden Ansprüche durchzuführen.

11. Thermisches Konditionierungssystem (100) nach Anspruch 10, wobei der Kältemittelkreislauf (10) eine erste Zweigleitung (B) aufweist, die parallel zu dem zweiten Expansionsventil (32) und dem dritten Wärmeübertrager (3) angeordnet ist, wobei die erste Zweigleitung (B) ein drittes Expansionsventil (33) und einen vierten Wärmeübertrager (4) aufweist, und wobei der vierte Wärmeübertrager (4) dafür konfiguriert ist, Wärme mit einem Innenluftstrom (Fi) des Fahrgastraums des Fahrzeugs auszutauschen.

12. Thermisches Konditionierungssystem (100) nach Anspruch 10 oder 11, wobei der Kältemittelkreislauf (10) eine zweite Zweigleitung (C) aufweist, die es dem Kältemittel am Ausgang des Verdichters (7) ermöglicht, unter Umgehung des ersten Wärmeübertragers (1), des zweiten Wärmeübertragers (2) und des zweiten Expansionsventils (32) in den dritten Wärmeübertrager (3) zu gelangen, wobei die zweite Zweigleitung (C) ein viertes Expansionsventil (34) aufweist.

## Claims

1. A method for controlling a thermal conditioning system (100), in particular for a motor vehicle, the thermal conditioning system (100) comprising:
- a heat transfer fluid circuit (20) configured to circulate a heat transfer fluid,
- a refrigerant circuit (10) comprising, in sequence according to the direction of refrigerant flow:
-- a compressor (7),
-- a first heat exchanger (1) configured to supply a first thermal power (Pw1) to a heat transfer fluid (F1),
-- a first expansion valve (31),
-- a second heat exchanger (2) arranged jointly on the refrigerant circuit (10) and on the heat transfer fluid circuit (20) so as to supply a second thermal power (Pw2) to the heat transfer fluid,
-- a second expansion valve (32),
-- a third heat exchanger (3),
the control method being **characterized in that** it comprises the steps:
(i) Receiving a setpoint for the total thermal power (C_Pw) to be supplied, the total thermal power setpoint (C_Pw) to supply being the sum of a first thermal power setpoint (C_Pw1) to supply to the heat transfer fluid (F1) in the first heat exchanger (1) and a second thermal power setpoint (C_Pw2) to supply to the heat transfer liquid in the second heat exchanger (2),
(ii) Controlling a pressure of the refrigerant fluid in the first heat exchanger (1) such that the sum of the first heat output (Pw1) supplied and the second heat output (Pw2) supplied is equal to the total heat output setpoint (C_Pw) to supply, and
(iii) Controlling a flow area of the first expansion valve (31) such that the second thermal power (Pw2) supplied by the second heat exchanger (2) is equal to the second setpoint for thermal power (C_Pw2) to supply.

2. A control method according to claim 1, wherein step (ii) comprises the sub-steps:
(ii1) Determining a temperature setpoint (C_T1) for the refrigerant in the first heat exchanger (1) based on the first thermal power setpoint (C_Pw1) and a flow rate setpoint (C_Q1) for the heat transfer fluid (F1),
(ii2) Determining a pressure setpoint (C_P1) for the refrigerant in the first heat exchanger (1) based on the determined temperature setpoint (C_T1).

3. A control method according to the preceding claim, wherein step (ii) comprises the sub-step:
(ii3) Controlling a rotational speed (N) of the compressor (7) such that the pressure (P1) of the refrigerant in the first heat exchanger (1) is equal to the determined pressure setpoint (C_P1).

4. A control method according to claim 2 or 3, wherein the compressor (7) is configured to cause the refrigerant to pass from a suction pressure (Pr_s) to a discharge pressure (Pr_d), and wherein step (i) comprises the sub-step:
(i3) Determining a discharge pressure setpoint (C_Pr_d) for the compressor (7) based on the determined pressure setpoint (C_P1) of the refrigerant in the first heat exchanger (1).

5. A control method according to the preceding claim, wherein step (ii) comprises the sub-step:
(ii1) Controlling a rotational speed (N) of the compressor (7) such that the discharge pressure (Pr_d) of the compressor (7) is equal to the determined discharge pressure setpoint (C_Pr_d).

6. A method according to any one of claims 1 to 5, wherein the heat transfer fluid (F1) is a flow of interior air (Fi) in a passenger compartment of a motor vehicle.

7. A method according to any one of claims 1 to 5, wherein the heat transfer fluid (F1) is a heat transfer liquid configured to circulate through a fifth heat exchanger (5) configured to exchange heat with an interior air flow (Fi) in the vehicle passenger compartment.

8. A method according to any one of the preceding claims, wherein the second heat exchanger (2) is thermally coupled to an element (25) of the vehicle powertrain via the heat transfer fluid of the heat transfer liquid circuit (20).

9. A method according to one of the preceding claims, wherein the third heat exchanger (3) is thermally coupled to a component (25) of the vehicle powertrain via the heat transfer fluid of the heat transfer liquid circuit (20).

10. A thermal management system (100), particularly for a motor vehicle, comprising:
- a heat transfer fluid circuit (20) configured to circulate a heat transfer fluid,
- a refrigerant circuit (10) comprising:
-- a main loop (A) comprising, in sequence according to the direction of refrigerant flow:
--- a compressor (7),
--- a first heat exchanger (1) configured to supply a first thermal power (Pw1) to a heat transfer fluid (F1),
--- a first expansion valve (31),
--- a second heat exchanger (2) arranged jointly on the refrigerant circuit (10) and on the heat transfer fluid circuit (20) so as to supply a second thermal power (Pw2) to the heat transfer fluid,
--- a second expansion valve (32),
--- a third heat exchanger (3),
the thermal conditioning system (100) being **characterized in that** it comprises an electronic control unit (50) configured to implement the control method according to one of the preceding claims.

11. A thermal conditioning system (100) according to claim 10, wherein the refrigerant circuit (10) comprises a first bypass branch (B) arranged in parallel with the second expansion valve (32) and the third heat exchanger (3), the first bypass branch (B) comprising a third expansion valve (33) and a fourth heat exchanger (4), and wherein the fourth heat exchanger (4) is configured to exchange heat with an air flow (Fi) inside the vehicle cabin.

12. A thermal conditioning system (100) according to claim 10 or 11, wherein the refrigerant circuit (10) comprises a second bypass branch (C) allowing the refrigerant at the outlet of the compressor (7) to reach the third heat exchanger (3) by bypassing the first heat exchanger (1), the second heat exchanger (2), and the second expansion valve (32), the second bypass branch (C) comprising a fourth expansion valve (34).
